# EUROPÄISCHE PATENTSCHRIFT

(19) Europäisches Patentamt / European Patent Office / Office européen des brevets

(11) Veröffentlichungsnummer: **0 266 565 B1**

(12)

(45) Veröffentlichungstag der Patentschrift:
11.04.90

(51) Int. Cl.⁴: **F16H 7/08**

(21) Anmeldenummer: 87114459.8

(22) Anmeldetag: 03.10.87

(54) Kettenspanner.

(30) Priorität: 30.10.86 DE 3636919

(43) Veröffentlichungstag der Anmeldung:
11.05.88 Patentblatt 88/19

(45) Bekanntmachung des Hinweises auf die Patenterteilung:
11.04.90 Patentblatt 90/15

(84) Benannte Vertragsstaaten:
DE ES FR GB IT SE

(56) Entgegenhaltungen:
EP-A- 0 106 325
DE-A- 1 650 620
DE-C- 958 070

(73) Patentinhaber: INA Wälzlager Schaeffler KG,
Industriestrasse 1-3 Postfach 1220,
D-8522 Herzogenaurach(DE)

(72) Erfinder: Goppelt, Dieter, Kärntnerstrasse 1,
D-8521 Münchaurach(DE)
Erfinder: Schmidt, Dieter, Billrothstrasse 6,
D-8500 Nürnberg(DE)

(74) Vertreter: Klug, Horst, Dipl.-Ing. (FH), c/o INA Wälzlager
Schaeffler KG Postfach 12 20,
D-8522 Herzogenaurach(DE)

## Beschreibung

Die Erfindung betrifft einen Kettenspanner entsprechend den im Oberbegriff von Anspruch 1 enthaltenen Merkmalen.

Derartige Kettenspanner werden beispielsweise bei einer Antriebskette von Nockenwellen eines Verbrennungsmotors verwendet. Ein derartiger Kettenspanner ist in der DE-A 1 650 620 beschrieben.

Bei dem Kettenspanner nach der DE-A 1 650 620 ist zur Montage des Dämpfungskolbens am Gehäuse eine Hutmutter abgedichtet anzubringen, an der sich der Dämpfungskolben über eine Druckfeder abstützt. Der Anschlagring kommt beim Zusammenbau des Kettenspanners nicht zwangsläufig in die richtige Ausgangsstellung.

Aufgabe der Erfindung ist es, einen Kettenspanner der eingangs genannten Art vorzuschlagen, dessen Montagemöglichkeit so vereinfacht ist, daß der Dämpfungskolben und der Anschlagring von der offenen Seite des Gehäuses her, bei der der Dämpfungskolben auf die Kette wirkt, einschiebbar ist und daß der Anschlagring beim Einschieben des Kolbens in die richtige Ausgangs-Zuordnung zwischen dem Gehäuse und dem Dämpfungskolben gelangt.

Erfindungsgemäß ist obige Aufgabe dadurch gelöst, daß das Gehäuse eine Aufnahmenut und der Dämpfungskolben einen Einschubrand für den Anschlagring aufweisen, wobei beim Einschieben des Dämpfungskolbens in das Gehäuse der Einschubrand den Anschlagring mitnimmt, bis dieser in die Aufnahmenut radial einschnappt, daß am Dämpfungskolben eine Sperrnut für den Anschlagring ausgebildet ist, die einerseits von einem Anschlagrand und andererseits von einer Anschlagrampe begrenzt ist, wobei die Anschlagrampe unter dem in die Aufnahmenut eingeschnappten Anschlagring hindurchpaßt, daß der Anschlagrand unter der Kraft des Federmittels den Anschlagring aus der Aufnahmenut in eine Rastrille des Gehäuses schiebt und daß am Ende eines Rücklaufhubes der in der Rastrille liegende Anschlagring an der Anschlagrampe anschlägt.

Durch diese Gestaltung ist es möglich, den Dämpfungskolben und den Anschlagring von der offenen Seite des Gehäuses, bei der der Dämpfungskolben auf die Kette wirkt, in das Gehäuse einzuschieben. Dementsprechend kann das Gehäuse einteilig hergestellt sein, wobei zur Aufnahme des Federmittels und des Dämpfungskolbens ein Sackloch genügt. Der Zusammenbau des Kettenspanners ist dadurch einfach. Außerdem entfallen Dichtungsprobleme am Gehäuse. Dies ist insbesondere dann vorteilhaft, wenn der Kettenspanner ein hydraulischer Kettenspanner ist, wobei der Dämpfungskolben durch Öldruck beaufschlagt ist.

Beim Zusammenbau des Kettenspanners wird mittels des Einschubrandes der Anschlagring mit in das Gehäuse eingeschoben. Er spreizt sich in der Aufnahmenut radial federnd auf. Unter der Kraft des Federmittels wird danach die Anschlagrampe des Kolbens unter dem Anschlagring hindurchgeschoben. Dieser wird anschließend vom Anschlagrand der Sperrnut in die Rastrille geschoben. In dieser Stellung ist die Ausgangsstellung für den Ketten-Spannbereich erreicht.

Wirkt von der Kette eine Stoßbelastung auf den Kolben, dann führt dies zu einem Rücklauf des Kolbens. Im Normalfall, wenn der Kolben unter Öldruck steht, ist der Rücklauf gedämpft und durch die Dämpfungsrate des Öldruck- Kolben- Systems begrenzt. Der Rücklauf endet, bevor die Anschlagrampe an dem Anschlagring anstößt (Dämpfungshub).

In Sonderfällen, in denen sich der Öldruck nicht oder noch nicht aufgebaut hat oder nicht mehr besteht und eine Belastung der Kette vorliegt, schlägt die Anschlagrampe am En de des Rücklaufhubs am Anschlagring an und begrenzt damit den Rücklauf des Kolbens. Ein derartiger Sonderfall liegt beispielsweise vor, wenn bei einer Umkehr der Umlaufrichtung der Kette deren Leertrum zum Arbeitstrum wird. Dies bei einem Motor eines Kraftfahrzeugs beispielsweise der Fall, wenn das Fahrzeug in Fahrtrichtung bergauf mit eingelegtem Vorwärtsgang oder in Fahrtrichtung bergab mit eingelegtem Rückwärtsgang abgestellt wird. Die Begrenzung des Rücklaufs des Kolbens durch den Anschlagring und die Anschlagrampe stellt sicher, daß der Kolben nicht soweit zurückgeht, daß die Kette bei einem folgenden Anlassen des Motors überspringt. Der mögliche Rücklaufhub ist größer als der oder gleich dem Dämpfungshub unter Berücksichtigung der temperaturbedingten Längung der Kette.

In bevorzugter Ausgestaltung der Erfindung sind am Gehäuse mehrere Rastrillen vorgesehen, wobei der Anschlagrand des Kolbens unter der Wirkung des Federmittels den Anschlagring im Zuge einer Längung der Kette in die jeweils nächste Rastrille schiebt. Es ist dadurch ein großer Ketten-Spannbereich bei entsprechend proportional kleinerem Dämpfungshub zu erreichen. In jeder Rastrille wirkt der Anschlagring in gleicher Weise als Anschlag für den Anschlagrand bzw. die Anschlagrampe der Sperrnut des Kolbens. Der mögliche Rücklaufhub ist kleiner als der Abstand der Rastrillen. Im gesamten Ketten-Spannbereich ergibt sich eine gleichmäßige Kettenspannung.

In einer Weiterbildung der Erfindung ist ein Montagering in eine mit einer Schräge und einer an diese anschließenden Rastfläche versehenen Nut des Dämpfungskolbens eingeschnappt. Der Montagering ist unter Verwendung eines in einen Spalt zwischen dem Gehäuse und dem Dämpfungskolben einsteckbaren Werkzeugs über eine Schräge auf die Rastfläche aufschiebbar, wobei er in eine Rille des Gehäuses greift und eine Bewegung des Kolbens gegenüber dem Gehäuse blockiert. In der Blockierstellung ist der Kettenspanner einfach zu montieren. Soll dann in Betriebsstellung der Dämpfungskolben die Kette beaufschlagen, dann ist der Kolben manuell entgegen der Kraft des Federmittels zu drücken, wobei der Montagering von der Rastfläche in die Nut zurückschnappt. Die Blockierstellung ist dadurch aufgehoben, so daß unter der Kraft des Federmittels der Anschlagring in die - erste - Rastrille geschoben wird.

Weitere vorteilhafte Ausgestaltungen der Erfindung ergeben sich aus Unteransprüchen und der folgenden Beschreibung eines Ausführungsbeispiels. In der Zeichnung zeigen:

Figur 1 einen Kettenspanner im Schnitt, wobei der Dämpfungskolben in der äußersten Raststellung steht,

Figur 2 eine Teilansicht des Kettenspanners, wobei der Dämpfungskolben in der innersten Anschlagstellung steht,

Figur 3 eine Teilansicht des Kettenspanners, wobei der Dämpfungskolben in Montagestellung blockiert ist,

Figur 4 eine Teilansicht des Kettenspanners, wobei der Dämpfungskolben sich in die innerste Raststellung bewegt,

Figur 5 eine Teilansicht des Kettenspanners, wobei der Dämpfungskolben in seiner innersten Raststellung steht und

Figur 6 eine Teilansicht des Kettenspanners, wobei aus der Stellung nach Figur 5 von der Kette eine Stoßbelastung auf den Dämpfungskolben ausgeübt ist.

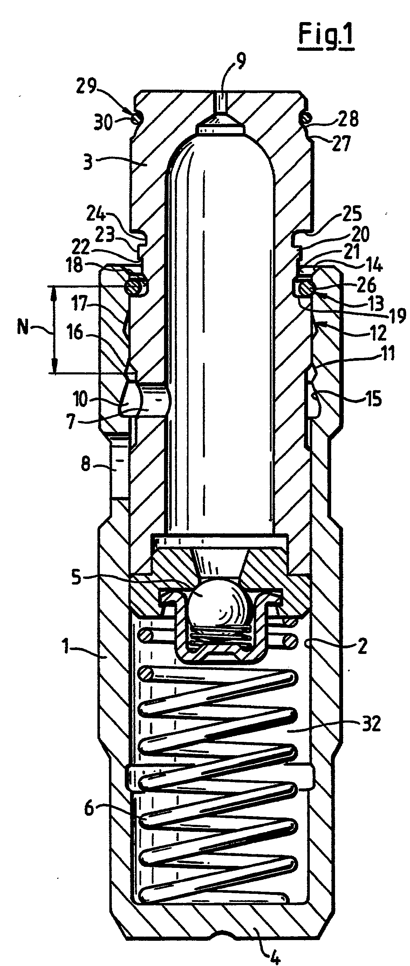

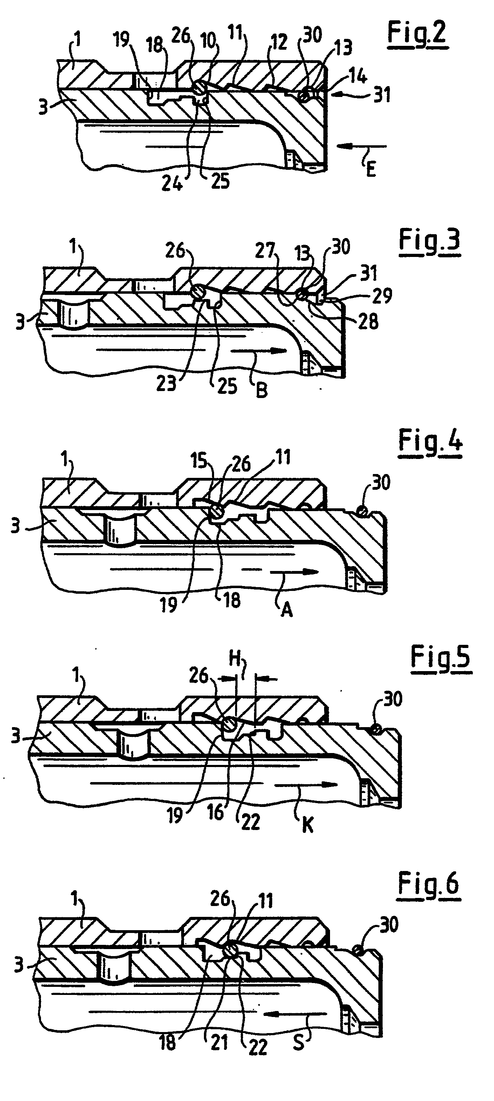

Die Figuren 2 bis 6 sind gegenüber Figur 1 verkleinert.

Ein einteiliges Gehäuse (1) weist eine einseitig offene Führungsbohrung (2) auf. In diese ist ein hohler Dämpfungskolben (3) eingesetzt. An der dem Boden (4) des Gehäuses (1) zugewandten Seite des Dämpfungskolbens (3) ist ein Rückschlagventil (5) angeordnet. Zwischen dem Boden (4) und dem Rückschlagventil (5) liegt eine auf den Kolben (3) wirkende Druckfeder (6). Seitlich am Kolben (3) ist eine Öffnung (7) vorgesehen, die mit einem Öldruckanschluß (8) des Gehäuses (1) in Verbindung steht. Eine Öffnung (9) am Kopf des Kolbens (3) dient der Entlüftung.

Am Innenumfang des Gehäuses (1) sind von innen nach außen nebeneinander eine Aufnahmenut (10), drei oder im Bedarfsfall mehrere gleiche Rastrillen (11,12,13), sowie eine Einführschräge (14) ausgebildet. Der Durchmesser der Aufnahmenut (10) ist größer als der der Rastrille (11). Die Aufnahmenut (10) weist zur Rastrille (11) hin eine Schräge (15) auf. Mit entsprechenden Schrägen (16,17) sind die Rastrillen (11,12) versehen.

Am Außenumfang des Kolbens (3) ist eine Sperrnut (18) ausgebildet, die einerseits von einem Anschlagrand (19) und andererseits von einer Anschlagrampe (20) begrenzt ist. Die Anschlagrampe (20) weist eine Sperrfläche (21), eine Anschlagkante (22) und eine Durchgangsfläche (23) auf. An die Anschlagrampe (20) schließt sich eine Einschubnut (24) mit einem Einschubrand (25) an. Der äußere Durchmesser des Anschlagrandes (19) und des Einschubrandes (25) entsprechen dem Außendurchmesser des Kolbens (3). Der Durchmesser der Durchgangsfläche (23) ist kleiner. Den genannten, umlaufenden Nuten bzw. Rillen des Gehäuses (1) und des Kolbens (3) ist ein federnder Anschlagring (26) zugeordnet.

Außen an dem Kolben (3) ist eine mit einer Rastfläche (27) und einer Schräge (28) versehene Nut (29) ausgebildet, die einem Montagering (30) zugeordnet ist.

Der Zusammenbau des beschriebenen Kettenspanners geschieht etwa folgendermaßen:

Nach dem Einsetzen der Druckfeder (6) in das Gehäuse (1) wird der Kolben (3) eingeschoben, in dessen Einschubnut (24) der Anschlagring (26) gelegt ist. In der Nut (29) liegt dabei der Montagering (30), der federnd am Nutgrund anliegt. Beim Einschieben des Kolbens (3) gelangt der Anschlagring (26) an die Einführschräge (14), die diesen entgegen seiner Federkraft in die Einschubnut (24) drückt. Beim weiteren Einschieben des Kolbens (3) drückt der Einschubrand (25) den Anschlagring (26) unter den Rastrillen (13,12,11) hindurch, bis er in die Aufnahmenut (10) gelangt. In der Aufnahmenut (10) spreizt sich der Anschlagring (26) unter seiner Federkraft auf, so daß er am Grund der Aufnahmenut (10) anliegt. Die Tiefe der Aufnahmenut (10) ist kleiner als der Querschnitt des Anschlagrings (26), so daß der in der Aufnahmenut (10) liegende Anschlagring (26) den innersten Anschlag für das manuelle Einschieben in Richtung des Pfeiles (E) bildet (vgl. Figur 2). Der Montagering (30) liegt dabei unterhalb der Rastrille (13).

Danach wird mit einem durch den Spalt (31) zwischen dem Kolben (3) und dem Gehäuse (1) eingesteckten Werkzeug der Montagering (30) in dieser Stellung gehalten und der Kolben (3) wird freigelassen. Unter der Wirkung der Druckfeder (6) verschiebt sich dann der Kolben (3) in Richtung des Pfeiles (B), wobei über die Schräge (28) die Rastfläche (27) unter den Montagering (30) gleitet und diesen entgegen seiner Federkraft in die Rastrille (13) drückt. Es ist dann die Blockierstellung des Kolbens (3) erreicht (vgl. Figur 3). In der Blockierstellung wird der Kettenspanner an dem Aggregat, beispielsweise Motor, dessen Kette zu spannen ist, montiert. In dieser Blockierstellung ist der Anschlagring (26) wirkungslos. Er steht über der Durchgangsfläche (23).

Nach der Montage der Kette und gegebenenfalls eines zwischen dem Kolben (3) und der Kette vorgesehenen Übertragungsgliedes wird entgegen der Richtung des Pfeiles (B) manuell auf den Dämpfungskolben (3) gedrückt, so daß der Montagering (30) von der Rastfläche (27) unter seiner Federkraft über die Schräge (28) in die Nut (29) gleitet. Der Anschlagring (26) verhindert dies nicht, da sein Abstand zum Einschubrand (25) ausreichend groß ist.

Der Kolben (3) bewegt sich nun in Richtung des Pfeiles (A) unter der Wirkung der Druckfeder (6) in Kettenspannrichtung. Der Anschlagrand (19) trifft dabei auf den Anschlagring (26) und schiebt diesen über die Schräge (15) in Richtung der Rastrille (11) (vgl. Figur 4). Die Sperrnut (18) ist hinreichend tief, um dabei das Zusammendrücken des Anschlagrings (26) nicht zu behindern. Der Anschlagring (26) schnappt dann in die erste Rastrille (11). Diese Stellung ist der Beginn des Ketten-Spannbereiches. Die Kette ist jetzt gespannt.

Die Arbeitsweise im Betrieb ist etwa folgende:

Über den Öldruckanschluß (8), der im Beispielsfalle unter Motoröldruck steht, wird über das Rückschlagventil (5) im Gehäuse (1) zwischen diesem und dem Kolben (3) im Raum (32) ein Hochdruck aufgebaut.

Bei einer schlagartigen Belastung der Kette wirkt auf den Kolben (3) eine Kraft in Richtung des Pfeiles (S) (vgl. Figur 6). Dies führt zu einer Rücklaufbewegung des Kolbens (3) entgegen der Kraftrichtung der Druckfeder (6). Die Rücklaufbewegung ist durch den Öldruck im Raum (32) des Gehäuses (1) gedämpft. Bei der Rücklaufbewegung gelangt die Sperrfläche (21) unter den in der Rastrille (11) liegenden Anschlagring (26). Sie verhindert, daß der Anschlagring (26) zusammengedrückt wird und gewährleistet, daß er am Grund der Rastrille (11) verbleibt.

Reicht der Öldruck im Raum (32) nicht aus um den Kolben (3) bei Belastung zum Stillstand zu bringen, dann trifft die Anschlagkante (22) auf den Anschlagring (26). Dadurch ist die Rücklaufbewegung des Kolbens (3) in Richtung des Pfeiles (S) begrenzt. Dieser maximale Rücklaufhub (H) ist durch den Abstand des Anschlagrandes (19) von der Anschlagkante (22) und den Durchmesser des kreisförmigen Querschnittes des Anschlagrings (26) bestimmt. Der maximale Rücklaufhub beträgt beispielsweise 2 mm.

Durch die Begrenzung des Rücklaufhubes (H) ist verhindert, daß die Kette bei schlagartigen Belastungen Zähne der von ihr angetriebenen Zahnräder überspringen kann. Günstig dabei ist auch, daß der Anschlagring (26) im Hinblick auf das Spannen und die Dämpfung der Kette lediglich als Anschlag wirkt und seine Federeigenschaft nur dazu dient, ihn in die jeweils geeignete Position zu bringen. Die Begrenzung des maximalen Rücklaufhubes (H) durch den Anschlagring (26) ist beispielsweise wirksam, wenn kurz nach dem Anlassen des Motors noch kein hinreichender Öldruck im Raum (32) aufgebaut ist, oder bei abgeschaltetem Motor das Leertrum der Kette, an dem der Kettenspanner angreift, belastet wird.

Längt sich die Kette im Betrieb beispielsweise aufgrund von Verschleißerscheinungen, dann wird der Kolben (3) unter der Wirkung der Druckfeder (6) bzw. des Öldrucks im Raum (32) in Richtung des Pfeiles (K) (vgl. Figur 5) weiter verschoben, wobei sein Anschlagrand (19) den Anschlagring (26) über die Schräge (16) der Rastrille (11) in die nächste Rastrille (12) verschiebt. Der Abstand der Rastrillen (11,12,13) ist größer als der maximale Rücklaufhub (H).

Ist der Anschlagring (26) in die Rastrille (12) gelangt, dann gilt für den maximalen Rücklaufhub (H) das oben Gesagte. Schließlich gelangt der Anschlagring (26) in die Rastrille (13) (vgl. Figur 1). Auch in dieser äußersten Raststellung kann der Kolben (3) nur um den maximalen Rücklaufhub (H) rücklaufen. Der den Ketten-Spannbereich bestimmende Nutzhub (N) des Kolbens (3) (vgl. Figur 1) beträgt beispielsweise 23 mm.

## Patentansprüche

1. Kettenspanner mit einem in einem Gehäuse geführten Dämpfungskolben, der von einem Federmittel in Kettenspannrichtung axial beaufschlagt ist, und mit einem radial federnden Anschlagring, dem Ausnehmungen des Gehäuses und des Dämpfungskolbens zugeordnet sind, welche mit dem Anschlagring zusammenarbeiten und eine Rücklaufbewegung des Dämpfungskolbens mit begrenztem Rücklaufhub entgegen der Kettenspannrichtung zulassen, dadurch gekennzeichnet, daß das Gehäuse (1) eine Aufnahmenut (10) und der Dämpfungskolben (3) einen Einschubrand (25) für den Anschlagring (26) aufweisen, wobei beim Einschieben des Dämpfungskolbens (3) in das Gehäuse (1) der Einschubrand (25) den Anschlagring (26) mitnimmt, bis dieser in die Aufnahmenut (10) radial einschnappt, daß am Dämpfungskolben (3) eine Sperrnut (18) für den Anschlagring (26) ausgebildet ist, die einerseits von einem Anschlagrand (19) und andererseits von einer Anschlagrampe (20) begrenzt ist, wobei die Anschlagrampe (20) unter dem in die Aufnahmenut (10) eingeschnappten Anschlagring (26) hindurchpaßt, daß der Anschlagrand (19) unter der Kraft des Federmittels (6) den Anschlagring (26) aus der Aufnahmenut (10) in eine Rastrille (11) des Gehäuses (1) schiebt und daß am Ende eines Rücklaufhubes (H) der in der Rastrille (11) liegende Anschlagring (26) an der Anschlagrampe (20) anschlägt.

2. Kettenspanner nach Anspruch 1, dadurch gekennzeichnet, daß am Gehäuse (1) weitere Rastrillen (12, 13) vorgesehen sind, wobei der Anschlagrand (19) des Dämpfungskolbens (3) unter der Wirkung des Federmittels (6) den Anschlagring (26) im Zuge einer Längung der Kette in die jeweils nächste Rastrille (12,13) schiebt.

3. Kettenspanner nach Anspruch 1 oder 2, dadurch gekennzeichnet, daß der in der Aufnahmenut (10) liegende Anschlagring (26) einen Endanschlag für den Einschubrand (25) bildet.

4. Kettenspanner nach einem der vorhergehenden Ansprüche, dadurch gekennzeichnet, daß die Tiefe der Aufnahmenut (10) kleiner als der Querschnitt des Anschlagrings (26) ist.

5. Kettenspanner nach einem der vorhergehenden Ansprüche, dadurch gekennzeichnet, daß die Tiefe der Aufnahmenut (10) größer als die Tiefe der Rastrille (11,12,13) ist.

6. Kettenspanner nach einem der vorhergehenden Ansprüche, dadurch gekennzeichnet, daß der federnde Anschlagring (26) einen kreisförmigen Querschnitt aufweist.

7. Kettenspanner nach einem der vorhergehenden Ansprüche, dadurch gekennzeichnet, daß zwischen der Anschlagrampe (20) und dem Einschubrand (25) eine Einschubnut (24) ausgebildet ist, die den Anschlagring (26) beim Einschieben des Dämpfungskolbens (3) aufnimmt.

8. Kettenspanner nach einem der vorhergehenden Ansprüche, dadurch gekennzeichnet, daß an der Öffnung des Gehäuses (1) eine Einführschräge (14) ausgebildet ist, die beim Einschieben des Dämpfungskolbens (3) den Anschlagring (26) in die Einschubnut (24) drückt.

9. Kettenspanner nach einem der vorhergehenden Ansprüche, dadurch gekennzeichnet, daß die Anschlagrampe (20) eine Sperrfläche (21), eine Anschlagkante (22) und eine Durchgangsfläche (23) für den Anschlagring (26) aufweist, wobei der Durchmesser der Durchgangsfläche (23) größer als der der Sperrfläche (21) ist und diese ein Zusammendrücken des Anschlagrings (26) sperrt, wenn er in einer der Rastrillen (11,12,13) liegt, und die Durchgangsfläche (23) unter dem Anschlagring (23) hindurchgeht, wenn er in der Aufnahmenut (10) liegt.

10. Kettenspanner nach einem der vorhergehenden Ansprüche, dadurch gekennzeichnet, daß die Sperrnut (18) zwischen dem Anschlagrand (19) und der Anschlagrampe (20) so ausgebildet ist, daß sie den Anschlagring (26) beim Verschieben von der Aufnahmenut (10) zu der bzw. den Rastrillen (11,12,13) aufnimmt.

11. Kettenspanner nach einem der vorhergehenden Ansprüche, dadurch gekennzeichnet, daß ein Montagering (30) in eine mit einer Schräge (28) und einer an diese anschließenden Rastfläche (27) versehenen Nut (29) des Dämpfungskolbens (3) eingeschnappt ist und daß der Montagering (30) unter Verwendung eines in einen Spalt (31) zwischen dem Gehäuse (1) und dem Dämpfungskolben (3) einsteckbaren Werkzeugs über die Schräge (28) auf die Rastfläche (27) aufschiebbar ist, wobei er in eine Rille des Gehäuses (1) greift und eine Bewegung des Dämpfungskolbens (3) gegenüber dem Gehäuse (1) blockiert.

12. Kettenspanner nach Anspruch 11, dadurch gekennzeichnet, daß die Rille eine der für den Anschlagring (26) vorgesehenen Rastrillen ist.

13. Kettenspanner nach Anspruch 11 oder 12, dadurch gekennzeichnet, daß in Blockierstellung des Montagerings (30) der Anschlagring (26) in der Aufnahmenut (10) liegt.

14. Kettenspanner nach Anspruch 13, dadurch gekennzeichnet, daß in Blockierstellung zwischen dem Montagering (30) und der Nut (29) sowie dem Anschlagring (26) und dem Einschubrand (25) ein etwa gleicher Abstand besteht, so daß die Blockierstellung durch Druck auf den Dämpfungskolben (3) entgegen der Kraftrichtung des Federmittels (6) lösbar ist.

15. Kettenspanner nach einem der vorhergehenden Ansprüche, dadurch gekennzeichnet, daß am Dämpfungskolben (3) an seinem im Gehäuse (1) geführten Ende ein Rückschlagventil (5) und an seinem Umfang eine Öldruckzuführung so angeordnet ist, daß im Raum (32) des Gehäuses (1) hinter dem Dämpfungskolben (3) ein Öldruck aufbaubar ist.

16. Kettenspanner nach Anspruch 15, dadurch gekennzeichnet, daß im Raum (32) als Federmittel eine Druckfeder (6) angeordnet ist.

17. Kettenspanner nach einem der vorhergehenden Ansprüche, dadurch gekennzeichnet, daß der maximale Rücklaufhub (H) zwischen dem Anschlagring (26) und der Anschlagkante (22) der Anschlagrampe (20) größer als der oder gleich dem durch den Öldruck erreichbaren Dämpfungshub des Dämpfungskolbens (3) ist.

18. Kettenspanner nach einem der vorhergehenden Ansprüche, dadurch gekennzeichnet, daß der maximale Rücklaufhub (H) kleiner als der Abstand zwischen zwei der Rastrillen (11,12,13) ist.

## Revendications

1. Tendeur de chaîne avec un piston amortisseur guié dans un boîtier et axialement sollicité dans la direction de tension de la chaîne par un moyen de ressort et avec un anneau d'arrêt faisant radialement ressort et auquel sont associés des évidements du boîtier et du piston amortisseur qui coopèrent avec l'anneau d'arrêt et permettent un mouvement de retour du piston amortisseur contre la direction de tension de la chaîne avec une course de retour limitée, caractérisé en ce que:
- le boîtier (1) comprend une rainure de réception (10) et le piston amortisseur (3) comprend un bord d'emboîtement (25) pour l'anneau d'arrêt (26), ledit bord d'emboîtement (25) entraînant l'anneau d'arrêt (26) quand le piston amortisseur (3) est poussé dans le boîtier (1), jusqu'au moment où l'anneau d'arrêt (26) s'encliquète radialement dans la rainure de réception (10),
- sur le piston amortisseur (3) est formée une rainure de blocage (18) pour l'anneau d'arrêt (26) qui est délimitée d'un côté par une collerette d'arrêt (19) et de l'autre côté par une rampe d'arrêt (20), ladite rampe d'arrêt (20) pouvant glisser sous l'anneau d'arrêt (26) encliqueté dans la rainure de réception (10),
- la collerette d'arrêt (19), sous la force du moyen de ressort (6) pousse l'anneau d'arrêt (26) hors de la rainure de réception (10) et dans une encoche d'arrêt (11) du boîtier (1),
- et au bout d'une course de retour (H), l'anneau d'arrêt (26) situé dans l'encoche d'arrêt (11) bute contre la rampe d'arrêt (20).

2. Tendeur de chaîne selon la revendication 1, caractérisé en ce que d'autres encoches d'arrêt (12, 13) sont prévues sur le boîtier (1), la collerette d'arrêt (19) du piston amortisseur (3), sous l'action du moyen de ressort (6), poussant l'anneau d'arrêt (26) au cours d'un allongement de la chaîne dans l'encoche d'arrêt suivante respective (12, 13).

3. Tendeur de chaîne selon la revendication 1 ou 2, caractérisé en ce que l'anneau d'arrêt (26) situé dans la rainure de réception (10) forme une butée pour le bord d'emboîtement (25).

4. Tendeur de chaîne selon une des revendications précédentes, caractérisé en ce que la profondeur de la rainure de réception (10) est plus petite que la section transversale de l'anneau d'arrêt (26).

5. Tendeur de chaîne selon une des revendications précédentes, caractérisé en ce que la profondeur de la rainure de réception (10) est plus grande que la profondeur de l'encoche d'arrêt (11, 12, 13).

6. Tendeur de chaîne selon une des revendications précédentes, caractérisé en ce que l'anneau d'arrêt (26) faisant ressort a une section transversale circulaire.

7. Tendeur de chaîne selon une des revendications précédentes, caractérisé en ce qu'entre la rampe d'arrêt (20) et le bord d'emboîtement (25) est formée une rainure d'emboîtement (24) qui lors de l'introduction du piston amortisseur (3) reçoit l'anneau d'arrêt (26).

8. Tendeur de chaîne selon une des revendications précédentes, caractérisé en ce qu'à l'ouvertu-

·re du boîtier (1) est formé un chanfrein d'insertion (14) qui, lors de l'introduction du piston amortisseur (3), pousse l'anneau d'arrêt (26) dans la rainure d'emboîtement (24).

9. Tendeur de chaîne selon une des revendications précédentes, caractérisé en ce que la rampe d'arrêt (20) présente une surface de blocage (21), un bord d'arrêt (22) et une surface de transition (23) pour l'anneau d'arrêt (26), le diamètre de la surface de transition (23) est plus grand que celui de la surface de blocage (21) qui bloque une compression de l'anneau d'arrêt (26) quand il est situé dans une des encoches d'arrêt (11, 12, 13), et la surface de transition passe sous l'anneau d'arrêt (26) quand celui-ci est situé dans la rainure de réception (10).

10. Tendeur de chaîne selon une des revendications précédentes, caractérisé en ce que la rainure de blocage (18) entre la collerette d'arrêt (19) et la rampe d'arrêt (20) est formée de façon à recevoir l'anneau d'arrêt (26) quand il est déplacé de la rainure de réception (10) vers une ou selon le cas, vers les encoches d'arrêt (11, 12, 13).

11. Tendeur de chaîne selon une des revendications précédentes, caractérisé en ce qu'une bague de montage (30) est encliquetée dans une gorge (29) du piston amortisseur (3) munie d'un chanfrein (28) et d'une surface d'arrêt (27) avoisinant celui-ci et qu'au moyen d'un outil qui peut être inséré dans une fente (31) entre le boîtier (1) et le piston amortisseur (3), la bague de montage (30) peut être poussée pardessus le chanfrein (28) sur la surface d'arrêt (27), de sorte qu'elle s'engage dans une encoche du boîtier (1) et bloque un mouvement du piston amortisseur (3) par rapport au boîtier (1).

12. Tendeur de chaîne selon la revendication 11, caractérisé en ce que l'encoche est une des encoches d'arrêt prévues pour l'anneau d'arrêt (26).

13. Tendeur de chaîne selon la revendication 11 ou 12, caractérisé en ce que, dans la position bloquée de la bague de montage (30), l'anneau d'arrêt (26) est situé dans la rainure de réception (10).

14. Tendeur de chaîne selon la revendication 13, caractérisé en ce que, dans la position bloquée, il y a à peu près la même distance entre la bague de montage (30) et la gorge (29) qu'entre l'annneau d'arrêt (26) et le bord d'emboîtement (25), de sorte que la position bloquée peut être neutralisée par pression sur le piston amortisseur (3) contre la direction de la force du moyen de ressort (6).

15. Tendeur de chaîne selon une des revendications précédentes, caractérisé en ce que le piston amortisseur (3) à son extrémité introduite dans le boîtier (1) est pourvu d'un clapet antiretour (5) et qu'à sa périphérie est amenagé un raccord à pression d'huile de telle façon qu'une pression d'huile peut être établie dans l'espace (32) du boîtier (1) derrière le piston amortisseur (3).

16. Tendeur de chaîne selon la revendication 15, caractérisé en ce que dans l'espace (32) est disposé en tant que moyen de ressort, un ressort de pression (6).

17. Tendeur de chaîne selon une des revendications précédentes, caractérisé en ce que la course maximale de retour (H) entre l'anneau d'arrêt (26) et le bord d'arrêt (22) de la rampe d'arrêt (20) est plus grande ou aussi grande que la course d'amortissement du piston amortisseur (3) qui peut être atteinte par la pression d'huile.

18. Tendeur de chaîne selon une des revendications précédentes, caractérisé en ce que la course maximale de retour (H) est plus petite que la distance entre deux encoches d'arrêt (11, 12, 13).

## Claims

1. Chain tensioner with a damping piston guided in a housing and loaded axially in the chain tensioning direction by a spring means and with a radially sprung stop ring, with which recesses of the housing and of the damping piston are associated, which cooperate with the stop ring and permit a return travel of the damping piston with a limited return stroke against the chain tensioning direction, characterized in that the housing (1) has a receiving groove (10) and the damping piston (3) has a push-in edge (25) for the stop ring (26), the push-in edge (25) entraining the stop ring (26) till this snaps radially into the receiving groove (10) when the damping piston (3) is pushed into the housing (1), that on the damping piston (3) a blocking groove (18) for the stop ring (26) is formed which is limited on one side by a stop ledge (19) and on the other by a stop ramp (20), the stop ramp (20) being able to pass through below the stop ring (26) snapped-in in the receiving groove (10), that the stop ledge (19) under the force of the spring means (6) pushes the stop ring (26) out of the receiving groove (10) into a catch groove (11) of the housing (1) and that at the end of a return stroke (H) the stop ring (26) situated in the catch groove (11) strikes the stop ramp (20).

2. Chain tensioner according to Claim 1, characterized in that further catch grooves (12, 13) are provided in the housing (1), the stop ledge (19) of the damping piston (3) pushing the stop ring (26) under the action of the spring means (6) into the next respective catch groove (12, 13) in the course of an elongation of the chain.

3. Chain tensioner according to Claim 1 or 2, characterized in that the stop ring (26) situated in the receiving groove (10) forms an end stop for the push-in edge (25).

4. Chain tensioner according to one of the preceding claims, characterized in that the depth of the receiving groove (10) is smaller than the cross-section of the stop ring (26).

5. Chain tensioner according to one of the preceding claims, charactsrized in that the depth of the receiving groove (10) is larger than the depth of the catch groove (11, 12, 13).

6. Chain tensioner according to one of the preceding claims, characterized in that the sprung stop ring (26) has a circular cross-section.

7. Chain tensioner according to one of the preceding claims, characterized in that between the stop ramp (20) and the push-in edge (25) a push-in groove (24) is formed which receives the stop ring (26) when the damping piston (3) is pushed in.

8. Chain tensioner according to one of the preceding claims, characterized in that at the opening of the housing (1) an inserting bevel (14) is formed, which presses the stop ring (26) into the push-in groove (24) when the damping piston (3) is pushed in.

9. Chain tensioner according to one of the preceding claims, characterized in that the stop ramp (20) comprises a blocking surface (21), a stop edge (22) and a pass-through surface (23) for the stop ring (26), the diameter of the pass-through surface (23) being larger than that of the blocking surface (21) which blocks compression of the stop ring (26) when this is situated in one of the catch grooves (11, 12, 13) and the pass-through surface (23) passes through below the stop ring (26) when this is situated in the receiving groove (10).

10. Chain tensioner according to one of the preceding claims, characterized in that the blocking groove (18) between the stop ledge (19) and the stop ramp (20) is formed in such a way that it receives the stop ring (26) when this is displaced from the receiving groove (10) to the catch groove or grooves (11, 12, 13) as the case may be.

11. Chain tensioner according to one of the preceding claims, characterized in that a mounting ring (30) is snapped into a groove (29) of the damping piston (3) provided with a bevel (28) and a catch surface (27) adjoining this and that the mounting ring (30) can be pushed over the bevel (28) onto the catch surface (27) by means of a tool which can be inserted into a gap (31) between the housing (1) and the damping piston (3) and engages into a groove of the housing (1) and blocks a movement of the damping piston (3) with respect to the housing (1).

12. Chain tensioner according to Claim 11, characterized in that the groove is one of the catch grooves provided for the stop ring (26).

13. Chain tensioner according to Claim 11 or 12, characterized in that in the blocked position of the mounting ring (30) the stop ring (26) is situated in the receiving groove (10).

14. Chain tensioner according to Claim 13, characterized in that in the blocked position there is approximately the same distance between the mounting ring (30) and the groove (29) as between the stop ring (26) and the push-in edge (25) so that the blocked position can be neutralized by pressure on the damping piston (3) in a direction opposite to the direction of force of the spring means (6).

15. Chain tensioner according to one of the preceding claims, characterized in that on the damping piston (3) at its end inserted into the housing (1) a non-return valve (5) and at its periphery, an oil pressure connection are arranged in such a way that an oil pressure can be built up in the space (32) of the housing (1) behind the damping piston (3).

16. Chain tensioner according to Claim 15, characterized in that in the space (32) compression spring (6) is arranged as spring means.

17. Chain tensioner according to one of the preceding claims, characterized in that the maximum return stroke (H) between the stop ring (26) and the stop edge (22) of the stop ramp (20) is larger than or equal to the damping stroke of the damping piston (3) obtainable by the oil pressure.

18. Chain tensioner according to one of the preceding claims, characterized in that the maximum return stroke (H) is smaller than the distance between two of the catch grooves (11, 12, 13).

<u>Fig.1</u>

Fig.2

Fig.3

Fig.4

Fig.5

Fig.6